# EUROPÄISCHE PATENTSCHRIFT

(11) **EP 3 408 045 B1**
(45) Veröffentlichungstag und Bekanntmachung des Hinweises auf die Patenterteilung: **11.05.2022**
(21) Anmeldenummer: 16810281.2
(22) Anmeldetag: 05.12.2016
(51) Int. Cl.: B22F 10/20, B22F 10/30, B22F 12/00, B29C 64/393, G01N 29/12, G01N 29/22, G01N 29/44, B33Y 10/00, B33Y 50/02, B29C 64/20, B29C 64/153

(54) **VERFAHREN ZUR PRÜFUNG EINES ADDITIV HERZUSTELLENDEN BAUTEILS UND VORRICHTUNG**
METHOD FOR CHECKING A COMPONENT TO BE PRODUCED IN AN ADDITIVE MANNER, AND DEVICE
PROCÉDÉ DE CONTRÔLE D'UNE PIÈCE À PRODUIRE PAR FABRICATION ADDITIVE ET DISPOSITIF

(30) Priorität: 28.01.2016 DE 102016201291
(43) Veröffentlichungstag der Anmeldung: 05.12.2018
(73) Patentinhaber: Siemens Energy Global GmbH & Co. KG, 81739 München (DE)
(72) Erfinder: HABERLAND, Christoph, 44791 Bochum (DE); JUNGBLUTH, Matthias, 13595 Berlin (DE); KREUTZER, Andreas, 12621 Berlin - Hellersdorf (DE); LAMMERS, Heiko, 10789 Berlin (DE); LORENZ, Thomas, 14193 Berlin (DE); REGENER, Martin, 14169 Berlin (DE); SPERLICH, Kathrin, 10555 Berlin (DE); TOMUSCHAT, Danny, 14469 Potsdam (DE)
(86) Internationale Anmeldenummer: PCT/EP2016/079730
(87) Internationale Veröffentlichungsnummer: WO 2017/129294

(56) Entgegenhaltungen:
- EP-A1- 1 815 936
- WO-A1-2015/109096
- WO-A1-2015/109096
- WO-A1-2015/157381
- DE-A1-102011 008 774
- US-A1- 2015 321 421

## Beschreibung

Die vorliegende Anmeldung betrifft ein Verfahren zur Prüfung eines additiv oder schichtweise hergestellten oder herzustellenden Bauteils.

Bei dem Bauteil kann es sich um eine Turbinenkomponente, beispielsweise um ein heißgasbeaufschlagtes oder hochtemperaturbelastetes Teil einer Gasturbine und/oder ein Werkstück oder Bauteil aus einer nickel- oder kobaltbasierten Superlegierung handeln.

Bekannte additive oder generative Herstellungsverfahren sind insbesondere das selektive Laserschmelzen (SLM: englisch für "selective laser melting"), das selektive Lasersintern (SLS: englisch für "selective laser sintering") und das Elektronenstrahlschmelzen (EBM: englisch für "electron beam melting"). Bei den genannten Verfahren wird das Bauteil häufig lagen-oder schichtweise in einem Pulverbett durch Aufschmelzen von das Pulverbett bildenden Partikeln mit einem Laser- oder Elektronenstrahl belichtet, aufgeschmolzen und entsprechend aufgebaut.

Ein additives Herstellungssystem ist beispielsweise in WO 2015/112422 A1 beschrieben.

DE 10 2011 008774 A1 beschreibt weiterhin ein Verfahren und eine Vorrichtung zur Prüfung eines additiv herzustellenden Bauteils.

EP 1815936 A1 beschreibt ein Verfahren zur Herstellung eines Werkstückes und ein Prüfverfahren.

Das Dokument WO 2015/109096 A1 beschreibt ein additives Herstellungssystem eingerichtet zur Ultraschallprüfung und ein entsprechendes Verfahren zum Betrieb.

Die WO 2015/157381 A1 beschreibt hingegen eine Echtzeit-Resonanzprüfung für die additive Herstellung.

Ein Verfahren zum Erkennen von Materialeigenschaften und eine entsprechende dreidimensionale Herstellungsvorrichtung ist hingegen aus US 2015/321421 A1 bekannt.

Bisher kann beispielsweise die Materialqualität von durch Gussverfahren hergestellten Bauteilen, insbesondere in der Herstellung von Turbinenschaufeln, durch additive Verfahren noch nicht erreicht werden. Insbesondere ist die Struktur additiv hergestellter Bauteile hinsichtlich von Verspannungen, Korngrößen und/oder Strukturdefekten ungünstig gegenüber Strukturen, welche durch Gießen oder Verfahren zur gerichteten Erstarrung hergestellt oder herstellbar sind. Gerichtet erstarrte Gefüge bezeichnen vorliegend vorzugsweise sowohl Einkristalle, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen.

Bisher können beispielsweise während eines SLM-Verfahrens auftretende Fehler, beispielsweise Strukturfehler, erst nach Abschluss des Verfahrens durch Prüfmethoden des Standes der Technik detektiert werden. Ein Nachjustieren der Herstellungsparameter oder das Verwerfen des Bauteils schon während der Herstellung, beispielsweise aufgrund von Strukturdefekten und/oder Ablösungen des Bauteils von einem Bauteilsubstrat, ist bisher nicht möglich. Insbesondere ein solches Ablösen oder eine Delaminierung des Bauteils vom Bauteilsubstrat kann eine Kollision des Bauteils mit einer Beschichtereinheit und damit eine schwerwiegende Schädigung der Anlage oder Vorrichtung zur Folge haben. Auch können beispielsweise durch Thermo-Spannungen induzierte Strukturfehler, wie Risse oder ein Verzug des Bauteils während der Herstellung nicht detektiert werden. Ein Abbruch des Herstellungsprozesses findet bei additiven Herstellungsverfahren des Standes der Technik bisher nur statt, wenn beispielsweise eine andere, nicht die Struktur des Bauteils betreffende wesentliche Störung, festgestellt wird.

Es wäre lediglich möglich, beispielsweise nach jeder aufgebrachten und/oder aufgebauten Lage das Bauteil aus der Vorrichtung auszubauen und auf Materialdefekte zu prüfen und anschließend wieder einzubauen, wobei diese Methode jedoch zeitlich viel zu ineffizient und damit nicht anwendbar wäre.

Es ist daher eine Aufgabe der vorliegenden Erfindung, Mittel anzugeben, mit denen eine Materialprüfung eines additiv herzustellenden oder hergestellten Bauteils schon während der Herstellung ermöglicht wird.

Diese Aufgabe wird durch den Gegenstand des unabhängigen Anspruchs 1 gelöst. Vorteilhafte Ausgestaltungen sind Gegenstand der abhängigen Patentansprüche. Ein Aspekt der vorliegenden Erfindung betrifft ein Verfahren zur Prüfung eines additiv oder schichtweise herzustellenden oder hergestellten Bauteils. Das Verfahren kann ein Prüfverfahren der Qualität, insbesondere der Materialqualität, des Bauteils sein.

Bei dem Verfahren kann es sich insbesondere um ein in-situ Verfahren zur Materialprüfung handeln.

Weiterhin bezeichnet die Qualität insbesondere die Materialqualität des Bauteils hinsichtlich von Strukturdefekten und/oder eines Ablösens, beispielsweise von einem Bauteilsubstrat.

Das Verfahren umfasst das mechanische Anregen mindestens einer additiv aufgebauten Schicht des Bauteils während einer Herstellung des Bauteils.

Der Ausdruck "während" der additiven Herstellung beschreibt vorzugsweise einen Zeitpunkt nach oder während einer Verfestigung oder Belichtung einer einzelnen Lage des oder für das Bauteil(s) und einen Zeitpunkt, zu dem das Bauteil vorzugsweise noch nicht fertiggestellt ist.

In einer Ausgestaltung umfasst das Verfahren das mechanische Anregen einer einzelnen additiv aufgebauten bzw. verfestigten Schicht des Bauteils.

In einer Ausgestaltung umfasst das Verfahren das mechanische Anregen einer Mehrzahl von additiv aufgebauten Schichten des Bauteils.

Das Verfahren umfasst weiterhin das Messen eines mechanischen Antwortsignals des, insbesondere bis zu diesem Zeitpunkt aufgebauten, Bauteils. Das Antwortsignal umfasst vorzugsweise eine Information über das mechanische Verhalten des Bauteils, insbesondere eine Information über das mechanische Antwortverhalten auf das mechanische Anregen bzw. die Anregung.

Das Verfahren umfasst weiterhin das Anzeigen einer Warnung und/oder das Durchführen eines Abbruchs der additiven Herstellung des Bauteils wenn das mechanische Antwortsignal oder ein oder mehrere Messwerte des Antwortsignals außerhalb eines vorbestimmten Toleranzbereichs liegt/liegen, wobei das mechanische Antwortsignal für das Anzeigen der Warnung und/oder das Durchführen des Abbruchs mit einem simulierten oder berechneten Wert verglichen wird. Der Wert kann beispielsweise auf einer Simulation, beispielsweise einer Finite-Elemente-Analyse, beruhen. Der simulierte oder berechnete Wert kann den vorbestimmten Toleranzbereich definieren.

Der vorbestimmte Toleranzbereich bezeichnet vorzugsweise einen Wertebereich, für den und soweit das mechanische Antwortsignal innerhalb dieses vorbestimmten Toleranzbereichs liegt, das Bauteil mit einer hinreichenden Materialqualität oder Fehlerfreiheit hergestellt oder aufgebaut wurde.

In einer Ausgestaltung umfasst das Verfahren das Anzeigen einer Warnung oder das Durchführen eines Abbruchs der additiven Herstellung des Bauteils, wenn das mechanische Antwortsignal oder ein oder mehrere Messwerte des Antwortsignals außerhalb des vorbestimmten Toleranzbereichs liegen.

In einer Ausgestaltung umfasst das Verfahren das Anzeigen einer Warnung, wenn das mechanische Antwortsignal oder ein oder mehrere Messwerte des Antwortsignals außerhalb des vorbestimmten Toleranzbereichs liegen. Gemäß dieser Ausgestaltung ist der vorbestimmte Toleranzbereich vorzugsweise ein erster vorbestimmter Toleranzbereich.

In einer Ausgestaltung umfasst das Verfahren das Durchführen eines Abbruchs der additiven Herstellung des Bauteils, wenn das mechanische Antwortsignal oder ein oder mehrere Messwerte des Antwortsignals außerhalb des vorbestimmten Toleranzbereichs liegen. Gemäß dieser Ausgestaltung ist der vorbestimmte Toleranzbereich vorzugsweise ein zweiter vorbestimmter Toleranzbereich.

Die Warnung wird angezeigt, wenn das mechanische Antwortsignal außerhalb des ersten vorbestimmten Toleranzbereichs liegt.

Der Abbruch der additiven Herstellung des Bauteils wird durchgeführt, wenn das mechanische Antwortsignal außerhalb des zweiten vorbestimmten Toleranzbereichs liegt.

Der zweite vorbestimmte Toleranzbereich ist größer als der erste vorbestimmte Toleranzbereich.

Durch diese Ausgestaltungen kann mit Vorteil eine höhere Toleranz für einen Abbruch des Herstellungsverfahrens definiert werden, wobei einem Anwender des Verfahrens durch die Warnung anheimgestellt werden kann, ob das Verfahren beispielsweise auch bei einem (wesentlichen) Strukturfehler des Bauteils komplett abzubrechen ist.

Wenn nachfolgend der vorbestimmte Toleranzbereich genannt ist, kann insbesondere der erste vorbestimmte Toleranzbereich oder der zweite vorbestimmte Toleranzbereich gemeint sein. Entsprechend der oben genannten Ausgestaltungen kann das Messen des mechanischen Antwortsignals nach jeder einzelnen oder nach einer Mehrzahl von aktuell aufgebauten Schichten des Bauteils durchgeführt werden.

Das additiv herzustellende Bauteil wird zusammen mit einem Bauteilsubstrat angeregt, auf welchem das Bauteil hergestellt oder aufgebaut wird. Dementsprechend umfasst das Antwortsignal vorzugsweise eine Information über das mechanische Verhalten oder die mechanischen Eigenschaften sowohl des bis dahin oder teilweise hergestellten Bauteils als auch des Bauteilsubstrats.

Bei der Bezeichnung des Ausdrucks "Bauteil" kann vorliegend insbesondere das herzustellende Bauteil sowie das teilweise oder fertig hergestellte Bauteil und optional ebenso das Bauteilsubstrat gemeint sein.

Ein weiterer Aspekt nicht gemäß der Erfindung betrifft eine Vorrichtung zur additiven Herstellung eines Bauteils, umfassend eine Einrichtung zum mechanischen Anregen mindestens einer additiv aufgebauten Schicht des Bauteils und/oder bzw. zusammen mit einem Bauteilsubstrat. Die Vorrichtung umfasst weiterhin eine Messeinheit zum Messen eines mechanischen Antwortsignals des Bauteils bzw. zusammen mit dem Bauteilsubstrat. Die Vorrichtung kann das Bauteilsubstrat umfassen. Die Vorrichtung umfasst weiterhin eine Kontrolleinheit, wobei die Kontrolleinheit ausgebildet ist, eine Warnung anzuzeigen und/oder einen Abbruch der additiven Herstellung durchzuführen, wenn das mechanische Antwortsignal außerhalb des vorbestimmten Toleranzbereichs liegt.

Als Vorteil wird mit der vorliegenden Erfindung insbesondere ein "Frühwarnsystem" angegeben, womit insbesondere die Herstellungsvorrichtung vor Beschädigungen geschützt werden kann. Weiterhin kann durch das Anzeigen der Warnung und/oder das Durchführen des Abbruchs (Prozessabbruchs) das additive Herstellungsverfahren effizienter gemacht werden, da keine Herstellungs- oder Maschinenlaufzeit mehr für den additiven Aufbau eines bereits beschädigten oder strukturell unbrauchbaren Bauteils "vergeudet" werden muss. Mit anderen Worten können auf diese Weise unnötige Maschinenlaufzeiten ausgeschlossen oder verhindert werden.

In einer Ausgestaltung wird das mechanische Anregen mittels Schall, Vibrationen und/oder Schwingungen, beispielsweise piezoelektrisch, durchgeführt.

In einer Ausgestaltung sind das mechanische Anregen und/oder das Messen des mechanischen Antwortsignals Teil einer akustischen Resonanz- oder Schwingungsanalyse, einer Schallemissionsanalyse, einer Ultraschallprüfung und/oder einer Vibrationsprüfung. Auf diese Weise kann die Materialprüfung des Bauteils besonders zweckmäßig erfolgen.

Entsprechend der vorherig beschriebenen Ausgestaltungen ist die Einrichtung zum mechanischen Anregen der Vorrichtung vorzugsweise entsprechend der beschriebenen Prüfverfahren oder Analysemethoden ausgebildet. Bei den beschriebenen Verfahren handelt es sich vorzugsweise um dem Fachmann bekannte Verfahren der zerstörungsfreien Materialprüfung.

Für das mechanische Anregen und/oder das Messen des mechanischen Antwortsignals wird ein charakteristisches Frequenzspektrum des Bauteils und/oder der Bauteilplattform herangezogen. Vorzugsweise beschreibt das beschriebene Frequenzspektrum ein charakteristisches Spektrum von Bauteilsubstrat und zumindest teilweise darauf aufgebautem Bauteil. Bei dem charakteristischen Frequenzspektrum kann es sich beispielsweise um eine Resonanzkurve des Bauteils handeln.

In einer Ausgestaltung wird das Verfahren derart durchgeführt und/oder ist die Vorrichtung derart ausgebildet, dass ein Strukturfehler oder -defekt in der Schicht und/oder eine Ablösung des Bauteils vom Bauteilsubstrat dazu führt, dass das mechanische Antwortsignal außerhalb des vorbestimmten Toleranzbereichs liegt. Bei dem Strukturfehler kann es sich beispielsweise um einen Riss, eine Fehlstelle, eine Versetzung und/oder eine Ausbildung von bestimmten Korngrößen in der Struktur des Bauteils handeln. Ein Riss im Bauteil führt beispielsweise lediglich zu einer kleinen Abweichung des mechanischen Antwortsignals oder eines Messwerts desselben von einem Sollwert, wobei vorzugsweise lediglich der erste oben genannte vorbestimmte Toleranzbereich "überschritten" wird, aber nicht der zweite vorbestimmte Toleranzbereich. Hingegen führt eine Ablösung des Bauteils vom Bauteilsubstrat vorzugsweise dazu, dass das Antwortsignal auch den zweiten vorbestimmten Toleranzbereich überschreitet (siehe oben).

Das mechanische Antwortsignal für das Anzeigen der Warnung und/oder das Durchführen des Abbruchs wird mit einem mechanischen Antwortsignal, beispielsweise insbesondere einem oder mehreren Messwerten, mindestens einer zuvor, d.h. vor der eigentlichen Schicht, additiv aufgebauten Schicht verglichen. Insbesondere kann ein Soll-Ist-Vergleich durchgeführt werden. Der beschriebene Wert oder Messwert der zuvor aufgebauten Schicht kann den vorbestimmten Toleranzbereich definieren.

In einer Ausgestaltung wird durch eine, vorzugsweise automatische Mustererkennung erkannt, ob das mechanische Antwortsignal oder Messwerte desselben innerhalb oder außerhalb des vorbestimmten Toleranzbereichs liegen.

Ein weiterer Aspekt der vorliegenden Erfindung betrifft ein additives Herstellungsverfahren umfassend das beschriebene Verfahren zur Prüfung der Qualität des additiv herzustellenden Bauteils. Das additive Herstellungsverfahren umfasst das additive bzw. schichtweise Herstellen mindestens einer weiteren Schicht für das Bauteil, wenn das mechanische Antwortsignal innerhalb des vorbestimmten Toleranzbereichs liegt.

In einer Ausgestaltung ist oder umfasst das additive Herstellungsverfahren selektives Laserschmelzen, selektives Lasersintern und/oder Elektronenstrahlschmelzen. Vorzugsweise ist das Verfahren ein Verfahren zum selektiven Laserschmelzen (SLM).

In einer Ausgestaltung umfasst das additive Herstellungsverfahren einen Verfestigungsschritt, wobei das mechanische Anregen (auch) während einer Verfestigung einzelner additiv aufgebauter oder hergestellter Schichten des Bauteils durchgeführt wird.

In einer Ausgestaltung werden - ausgehend von dem mechanischen Antwortsignal - Parameter der Herstellung des Bauteils zur Vermeidung von Fehlern oder Schäden, beispielsweise (weiteren) Material-, Vorrichtungs-, oder Folgeschäden angepasst. Mit Vorteil kann dadurch unter Umständen in situ auf einen Herstellungsfehler im oder am Bauteil durch eine Anpassung der Parameter reagiert und auf eine Neuherstellung des Bauteils verzichtet werden.

Ein weiterer Aspekt der vorliegenden Erfindung betrifft ein Bauteil, welches durch das beschriebene Verfahren hergestellt wird oder herstellbar ist.

Das beschriebene Bauteil weist gemäß dem beschriebenen Herstellungsverfahren vorzugsweise spezifische und/oder charakteristische Eigenschaften auf. Beispielsweise kann das Bauteil hinsichtlich seiner Struktur- oder Oberflächeneigenschaften durch einschlägige Verfahren der Oberflächen- oder Strukturanalyse, welche mittels anderer Verfahren hergestellt wurden oder herstellbar sind, unterschieden werden. Solche Verfahren sind beispielsweise Transmissionselektronenmikroskopie, energiedispersive Röntgenanalyse und/oder Röntgenfluoreszenzanalyse.

Ausgestaltungen, Merkmale und/oder Vorteile, die sich vorliegend auf das Verfahren beziehen, können sich ebenfalls auf die Vorrichtung und/oder das Bauteil beziehen, und umgekehrt. Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen.
- Figur 1: zeigt schematisch eine Schnitt- oder Seitenansicht einer Vorrichtung zur additiven Herstellung eines Bauteils oder Werkstücks (nicht Teil der vorliegenden Erfindung).
- Figur 2: deutet schematisch zumindest einen Teil eines Verfahrens zur Prüfung des Bauteils gemäß einer ersten Ausgestaltung an.
- Figur 3: deutet schematisch zumindest einen Teil eines Verfahrens zur Prüfung des Bauteils gemäß einer weiteren Ausgestaltung an.

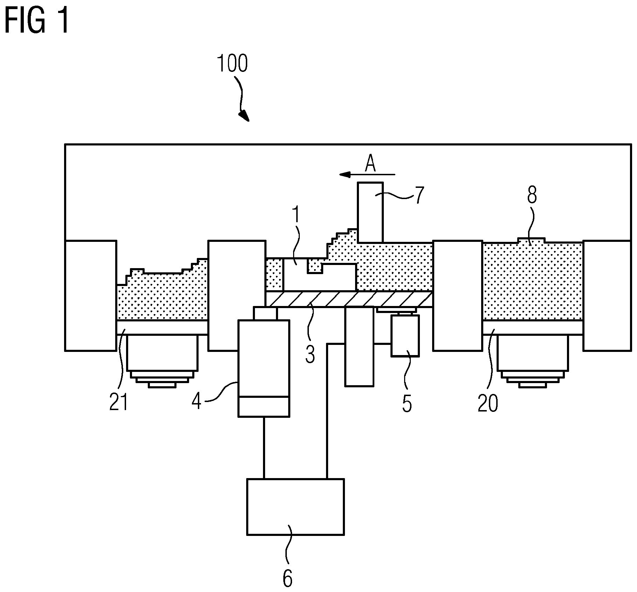

Figur 1 zeigt eine Vorrichtung 100 (nicht Teil der vorliegenden Erfindung). Die Vorrichtung 100 ist vorzugsweise eine Vorrichtung zur additiven Herstellung eines Bauteils oder Werkstücks 1.

Anhand der Vorrichtung 100 wird ein Verfahren zur Prüfung, insbesondere Materialprüfung, des Bauteils 1 beschrieben. Weiterhin wird ein additives Herstellungsverfahren für das Bauteil 1 angedeutet bzw. beschrieben.

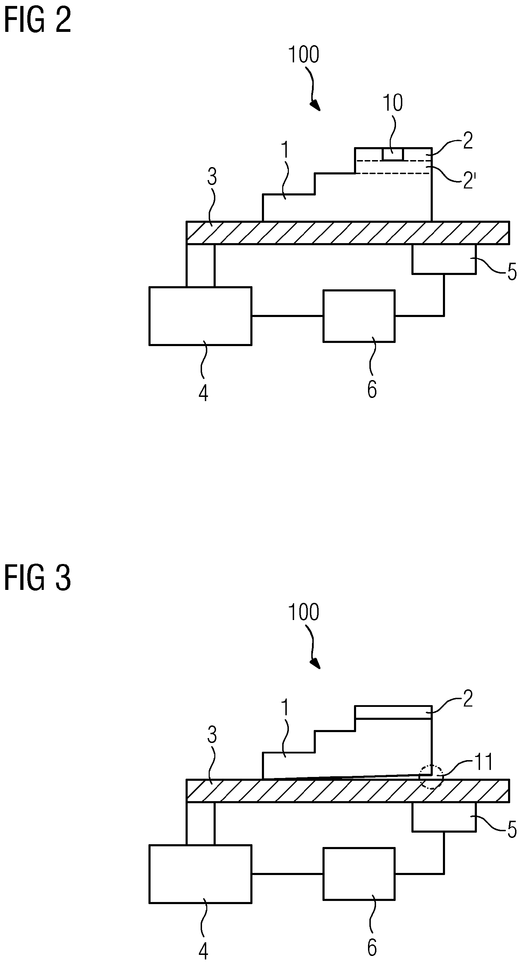

Das Bauteil 1 kann ein gemäß einer vorbestimmten oder gewünschten Geometrie hergestellter oder herstellbarer dreidimensionaler Gegenstand sein, welcher gemäß dem additiven Herstellungsverfahren, beispielsweise einem SLM-Verfahren (selektives Laserschmelzen), durch eine Vielzahl einzelner Schichten (vergleiche beispielsweise Bezugszeichen 2 und 2' in Figur 2) aufgebaut wird.

Bei dem Bauteil 1 kann es sich um eine Turbinenkomponente, beispielsweise ein Teil im Heißgaspfad einer Gasturbine, beispielsweise aus einer nickel- oder kobaltbasierten Superlegierung, handeln.

In Figur 1 ist das Bauteil 1 vorzugsweise nur teilweise und nicht fertig hergestellt, d.h. während seiner additiven Herstellung gezeigt.

Die Vorrichtung 100 umfasst eine Bauteilplattform oder ein Bauteilsubstrat 3. Das Bauteilsubstrat 3 ist absenkbar, beispielsweise relativ zu weiteren Komponenten der Vorrichtung 100. Nach der Herstellung einer einzelnen Schicht des Bauteils oder für das Bauteil 1, wird das Bauteilsubstrat 3 vorzugsweise um ein der Schichtdicke entsprechendes Maß abgesenkt und anschließend einzeln beispielsweise mit einem Laserstrahl aufgeschmolzen und verfestigt. Eine entsprechende Laser- oder Verfestigungsvorrichtung ist in den Figuren nicht explizit gezeigt.

Beim selektiven Laserschmelzen (SLM-Verfahren) wird im Rahmen der Verfestigung ein Pulverbett gerastert und/oder vorzugsweise gemäß einer vorgegebenen Verfestigungs- oder Belichtungsgeometrie verfestigt. Entsprechende Daten für die Verfestigung werden vorzugsweise direkt einer 3D CAD-Datei entnommen.

Alternativ zum SLM-Verfahren kann das beschriebene additive Herstellungsverfahren selektives Lasersintern (SLS) oder Elektronenstrahlschmelzen (EBM) sein.

Die Vorrichtung 100 umfasst weiterhin eine Pulverzuführung oder Pulverzuführungseinrichtung 20.

Die Vorrichtung 100 umfasst weiterhin eine Pulverabführung oder Pulverabführungseinrichtung 21.

Die Vorrichtung 100 umfasst weiterhin eine Beschichtereinheit oder eine Rakel 7. Mithilfe der Beschichtereinheit 7 wird Pulver 8 für das Bauteil 1 vorzugsweise aus der Pulverzuführung 20 entnommen und (schichtweise) für jeden einzelnen Herstellungsschritt in einem Herstellungsraum auf dem Bauteilsubstrat 3 verteilt (vergleiche Verteilung entlang Richtung A in Figur 1). Überschüssiges Pulver 8 wird von der Beschichtungseinheit 7 in die Pulverabführung 21 verschoben.

Die Pulverzuführung 20 und/oder die Pulverabführung 21 können ihrerseits absenkbare Plattformen (nicht explizit gekennzeichnet) umfassen.

Die Vorrichtung 100 weist weiterhin eine Einrichtung 4 zum mechanischen Anregen des Bauteils 1 auf. Das Bauteil 1 wird bei dem mechanischen Anregen zusammen mit dem Bauteilsubstrat 3 angeregt, da das Bauteil 1 oder einzelne Schichten des Bauteils 1 vorzugsweise stoffschlüssig oder metallurgisch mit dem Bauteilsubstrat 3 verbunden sind. Dazu ist die Einrichtung 4 vorzugsweise an einer Unterseite des Bauteilsubstrats 3 angeordnet und physisch mit dem Bauteilsubstrat 3 verbunden. Die Einrichtung 4 kann beispielsweise Schall, Vibrationen oder Schwingungen erzeugen. Demgemäß kann die Einrichtung 4 ein piezoelektrisches Element sein oder umfassen. Die Einrichtung 4 kann weiterhin zum mechanischen Anregen mittels akustischer Resonanz- oder Schwingungsanalyse, Schallemissionsanalyse, Vibrationsprüfung und/oder Ultraschallprüfung ausgelegt sein.

Bei dem charakteristischen Frequenzspektrum kann es sich um eine zu messende Resonanz, beispielsweise eine Resonanzkurve des Bauteils 1, auf dem Bauteilsubstrat 3 handeln.

Insbesondere kann die Einrichtung 4, vorzugsweise im Fall einer Material- oder Strukturprüfung mittels Resonanz- oder Schwingungsanalyse, ausgelegt sein, das Bauteil 1 mittels eines charakteristischen Frequenzspektrums resonant anzuregen. Beispielsweise kann eine Vielzahl von verschiedenen Schwingungsmoden des Bauteils 1 durch die Einrichtung 4 resonant angeregt werden. Als Antwort auf diese Resonanz oder Anregung wird vorzugsweise ein mechanisches Antwortsignal des Bauteils 1 auf dem Bauteilsubstrat 3 gemessen.

Dazu weist die Vorrichtung 100 weiterhin eine Messeinheit 5 auf. Die Messeinheit 5 ist vorzugsweise an einer Unterseite des Bauteilsubstrats 3 angeordnet. Die Messeinheit 5 ist ausgelegt, ein oder mehrere mechanische Antwortsignale des (bis dahin) zumindest teilweise hergestellten oder aufgebauten Bauteils 1 zu messen, aufzunehmen oder zu registrieren. Demgemäß kann die Messeinheit 5 einen Schall-, Vibration- oder Beschleunigungsaufnehmer aufweisen. Insbesondere kann die Messeinheit 5 ein Laservibrometer oder einen piezoelektrischen Sensor umfassen.

Bei den Antwortsignalen oder dementsprechenden Messwerten handelt es sich vorzugsweise um Schwingungssignale des Bauteils 1 zusammen mit dem Bauteilsubstrat 3, welche sich gemäß dem Fortgang der Herstellung des Bauteils 1 von Schicht zu Schicht nur wenig unterscheiden.

Die Vorrichtung 100 weist weiterhin eine Kontrolleinheit 6 auf. Die Kontrolleinheit 6 ist, zweckmäßigerweise elektrisch, mit der Einrichtung 4 und der Messeinheit 5 verbunden. Die Kontrolleinheit 6 ist vorzugsweise ausgebildet, eine Warnung anzuzeigen und/oder einen Abbruch der additiven Herstellung durchzuführen, wenn ein mechanisches Antwortsignal außerhalb des vorbestimmten Toleranzbereichs liegt.

Das vorgestellte Verfahren umfasst das mechanische Anregen einer oder einer Mehrzahl von additiv aufgebauten oder herzustellenden Schichten des Bauteils während der additiven Herstellung des Bauteils 1.

Vorzugsweise erfolgt das mechanische Anregen nach dem Verfestigen oder Herstellen jeder einzelnen hergestellten oder aufgebauten Schicht für das Bauteil 1. Alternativ kann das mechanische Anregen nach dem Verfestigen oder Herstellen zweier oder mehrerer Schichten für das Bauteil 1 erfolgen. Das mechanische Anregen kann beispielsweise auch während der Verfestigung des Pulvers 8 mit einem Laserstrahl erfolgen.

Das Verfahren umfasst weiterhin das Messen des mechanischen Antwortsignals. Vorzugsweise umfasst das Antwortsignal Informationen über das Schwingungsverhalten, insbesondere über die Eigen- oder Resonanzfrequenzen des Bauteils 1 zusammen mit dem Bauteilsubstrat 3, auf dem das Bauteil 1 hergestellt wird.

Weiterhin umfasst das Verfahren das Anzeigen einer Warnung und/oder das Durchführen eines Prozessabbruchs oder Abbruchs der Herstellung des Bauteils, wenn das mechanische Antwortsignal bzw. ein oder mehrere Messwerte desselben außerhalb eines vorbestimmten Toleranzbereichs liegen.

Der vorbestimmte Toleranzbereich bezeichnet vorzugsweise einen Wertebereich, beispielsweise von Messwerten zum Schwingungsverhalten, des oder für das Antwortsignal, im Rahmen dessen das Bauteil 1 als zumindest weitgehend fehlerfrei aufgebaut zu qualifizieren ist.

Vorliegend können im Rahmen des beschriebenen Verfahrens ein erster vorbestimmter Toleranzbereich und ein zweiter vorbestimmter Toleranzbereich bestimmt oder definiert werden, wobei der zweite vorbestimmte Toleranzbereich vorzugsweise größer oder weiter gefasst ist als der erste vorbestimmte Toleranzbereich.

Der erste und der zweite vorbestimmte Toleranzbereich sind vorzugsweise derart gewählt, dass, wenn ein mechanisches Antwortsignal beispielsweise lediglich außerhalb des ersten vorbestimmten Toleranzbereichs liegt, eine Warnung an einen Benutzer oder Anwender ausgegeben wird. Falls ein mechanisches Antwortsignal beispielsweise ebenfalls außerhalb des zweiten vorbestimmten Toleranzbereichs liegt, wird vorzugsweise das gesamte Herstellungsverfahren abgebrochen.

Figur 2 zeigt eine schematische Schnitt- oder Seitenansicht der Vorrichtung 100 (eine Beschichtereinheit, eine Pulverzuführung und auch eine Pulverabführung sind im Gegensatz zu Figur 1 nicht gezeigt). Figur 2 zeigt insbesondere ein teilweise hergestelltes Bauteil 1 auf dem Bauteilsubstrat 3. Es ist weiterhin eine aktuell oder zuletzt aufgebaute, d.h. verfestigte Schicht 2 gezeigt. Die Schicht 2 ist auf einer zuvor, d.h. vor der Schicht 2, aufgebauten Schicht 2' hergestellt, aufgebaut oder verfestigt worden.

Die Schicht 2' weist vorzugsweise keine wesentlichen Strukturdefekte, wie beispielsweise Kristallfehler, Fehlstellen, Versetzungen oder sonstige durch mechanische Anregung detektierbare Fehler auf. Dementsprechend ist das Antwortsignal (nicht explizit gekennzeichnet) der Schicht 2' von dem beschriebenen Verfahren vorzugsweise innerhalb des vorbestimmten Toleranzbereichs angesiedelt und es braucht weder eine Warnung angezeigt, noch der Herstellungsprozess abgebrochen werden.

Die Schicht 2 weist einen mit dem Bezugszeichen 10 gekennzeichneten Strukturfehler 10 (siehe oben) auf. Zweckmäßigerweise ist der Strukturfehler derart groß oder gravierend, dass mittels des beschriebenen Verfahrens, über das Antwortsignal vorteilhafterweise eine Abweichung z.B. des Schwingungs- oder Vibrationsverhaltens, wie oben beschrieben, gemessen werden kann. Beispielsweise weicht also die Resonanzkurve des Antwortsignals derart von einer zu erwartenden oder Soll-Resonanzkurve ab, dass das entsprechende Antwortsignal vorzugsweise lediglich außerhalb des ersten vorbestimmten Toleranzbereichs liegt. Daraufhin wird einem Anwender des oder der Verfahren vorzugsweise eine Warnung angezeigt und er kann selbst entscheiden, ob der ganze Herstellungsprozess abgebrochen werden muss, oder bspw. lediglich Parameter der Herstellung korrigiert und/oder angepasst werden müssen.

Die genannte Warnung kann insbesondere zweckmäßig sein, da die Fertigstellung eines beispielsweise hinsichtlich seiner Mikrostruktur unbrauchbaren Bauteils 1 in unnötiger Weise Maschinenlaufzeit und Material verbraucht.

Das Antwortsignal der Schicht 2 kann für ein eventuelles Anzeigen der Warnung und/oder das Abbrechen der Herstellung des Bauteils, beispielsweise mit dem entsprechenden mechanischen Antwortsignal der Schicht 2', welche direkt unterhalb der Schicht 2 angeordnet ist, verglichen werden. Alternativ oder zusätzlich kann das Antwortsignal der Schicht 2 für das Anzeigen der Warnung und/oder das Abbrechen der Herstellung des Bauteils, beispielsweise mit einem berechneten oder simulierten Wert oder Messwert für das Antwortsignal verglichen werden. Der genannte Wert kann einer rechnergestützten Konstruktion des Bauteils und/oder einer Finite-Elemente-Analyse entstammen.

Figur 3 zeigt eine schematische Schnitt- oder Seitenansicht der Vorrichtung 100. Figur 3 zeigt ebenso wie Figur 2 ein teilweise hergestelltes Bauteil 1 auf dem Bauteilsubstrat 3. Es ist bspw. angedeutet, dass es während der Herstellung der Schicht 2 oder zu einem anderen Zeitpunkt der additiven Herstellung des Bauteils 1 zu einer Ablösung des Bauteils 1 vom Bauteilsubstrat 3 kommt (vergleiche gestrichelten Kreis 11).

Eine solche Ablösung kann, beispielsweise durch eine Kollision mit der Beschichtereinheit (vgl. Bezugszeichen 7 in Figur 1) zu einer Schädigung der Vorrichtung 100 führen.

Die Ablösung führt - im Vergleich zu einem Strukturfehler in lediglich einer einzelnen Schicht des Bauteils 1 (vgl. Bezugszeichen 10 in Figur 2) - vorzugsweise zu einer größeren Abweichung des Antwortsignals von einem zu erwartenden Antwortsignal, welches im Falle eines zweckmäßig aufgebauten und im Wesentlichen strukturfehlerfreien Bauteil von der Messeinheit 5 gemessen wird. Der Grund der im Vergleich zu einem Strukturfehler vergrößerten Abweichung des Antwortsignals von dem zu erwartenden Antwortsignal und über den zweiten vorbestimmten Toleranzbereich hinaus, liegt vorzugsweise in der größeren Änderung der Eigenfrequenz(en) oder Resonanzen des Verbunds von Bauteilsubstrat 3 und Bauteil 1 durch die Ablösung.

Dementsprechend wird für das Bauteil 1 in Figur 3 vorzugsweise ein Antwortsignal gemessen, welches sowohl außerhalb des ersten als auch des zweiten vorbestimmten Toleranzbereichs liegt. Folglich wird die Herstellung des Bauteils 1 vorzugsweise automatisch abgebrochen. Optional kann dem Benutzer ebenfalls eine Warnung angezeigt werden.

Die Kontrolleinheit 6 kann beispielsweise derart ausgebildet sein, ein Antwortsignal über eine Mustererkennung zu messen oder zu identifizieren und dann entsprechend zu entscheiden, ob das Antwortsignal oder beispielsweise dementsprechende Messwerte innerhalb oder außerhalb der genannten vorbestimmten Toleranzbereiche liegt oder nicht.

Über die Kontrolleinheit 6 können vorzugsweise weiterhin die genannten Toleranzbereiche definiert oder dimensioniert werden. Weiterhin können durch die Kontrolleinheit 6 - ausgehend von dem mechanischen Antwortsignal - Parameter der Herstellung des Bauteils zur Vermeidung von Fehlern oder Schäden, beispielsweise (weiteren) Material-, Vorrichtung-, oder Folgeschäden, angepasst werden. Bei den Parametern kann es sich um das Strahlprofil eines Lasers oder Elektronenstrahls, um eine Pulverförderungsrate, die Größe eines belichteten Bereichs, eine Belichtungsgeschwindigkeit, Parameter der Laserfokussierung, die Laserleistung, eine Flussrate eines Inertgases für die Herstellung, eine Schicht- oder Lagendicke der nacheinander herzustellenden Schichten des Bauteils und/oder Parameter der Verfestigung handeln.

## Patentansprüche

1. Verfahren zur Prüfung eines additiv herzustellenden Bauteils (1), umfassend die folgenden Schritte:
- mechanisches Anregen mindestens einer additiv aufgebauten Schicht (2) des Bauteils (1) zusammen mit einem Bauteilsubstrat (3), während einer additiven Herstellung des Bauteils (1) auf dem Bauteilsubstrat,
- Messen eines mechanischen Antwortsignals des Bauteils (1), wobei für das mechanische Anregen und das Messen des mechanischen Antwortsignals ein charakteristisches Frequenzspektrum, beispielsweise zur Resonanz- oder Schwingungsanalyse, des Bauteils (1) herangezogen wird, und
- Anzeigen einer Warnung und/oder Durchführen eines Abbruchs der additiven Herstellung des Bauteils (1), wenn das mechanische Antwortsignals außerhalb eines vorbestimmten Toleranzbereichs liegt, wobei das mechanische Antwortsignal für das Anzeigen der Warnung und/oder das Durchführen des Abbruchs mit einem simulierten oder berechneten Wert verglichen wird, und wobei das mechanische Antwortsignal für das Anzeigen der Warnung und/oder das Durchführen des Abbruchs mit einem mechanischen Antwortsignal mindestens einer zuvor additiv aufgebauten Schicht (2') verglichen wird, wobei die Warnung angezeigt wird, wenn das mechanische Antwortsignal außerhalb eines ersten vorbestimmten Toleranzbereichs liegt und wobei der Abbruch der additiven Herstellung des Bauteils (1) durchgeführt wird, wenn das mechanische Antwortsignal außerhalb eines zweiten vorbestimmten Toleranzbereichs liegt und wobei der zweite vorbestimmte Toleranzbereich größer ist als der erste vorbestimmte Toleranzbereich.

2. Verfahren gemäß Anspruch 1, wobei das mechanische Anregen mittels Schall, Vibrationen und/oder Schwingungen, beispielsweise piezoelektrisch, durchgeführt wird.

3. Verfahren gemäß Anspruch 1 oder 2, wobei das mechanische Anregen und das Messen Teile einer akustischen Resonanz- oder Schwingungsanalyse, einer Schallemissionsanalyse, einer Ultraschallprüfung oder einer Vibrationsprüfung sind.

4. Verfahren gemäß einem der vorhergehenden Ansprüche, welches derart durchgeführt wird, dass ein Strukturfehler (10) in der Schicht (2) oder eine Ablösung (11) des Bauteils (1) von einem Bauteilsubstrat (3) dazu führt, dass das mechanische Antwortsignal außerhalb des vorbestimmten Toleranzbereichs liegt.

5. Additives Herstellungsverfahren umfassend das Verfahren zur Prüfung gemäß einem der vorhergehenden Ansprüche, umfassend das additive Herstellen mindestens einer weiteren Schicht (2') für das Bauteil, wenn das mechanische Antwortsignal innerhalb des vorbestimmten Toleranzbereichs liegt.

6. Additives Herstellungsverfahren gemäß Anspruch 5, welches einen Verfestigungsschritt umfasst und wobei das mechanische Anregen während einer Verfestigung einzelner additiv aufgebauter Schichten des Bauteils (1) durchgeführt wird.

7. Additives Herstellungsverfahren gemäß Anspruch 5 oder 6, wobei - ausgehend von dem mechanischen Antwortsignal - Parameter der Herstellung des Bauteils (1) zur Vermeidung von Fehlern oder Schäden angepasst werden.

8. Additives Herstellungsverfahren gemäß einem der Ansprüche 5 bis 7, welches selektives Laserschmelzen, selektives Lasersintern oder Elektronenstrahlschmelzen umfasst.

## Claims

1. Method for testing a component (1) to be additively produced, comprising the following steps:
- mechanically exciting at least one additively constructed layer (2) of the component (1) together with a component substrate (3) during an additive production of the component (1) on the component substrate,
- measuring a mechanical response signal of the component (1) wherein a characteristic frequency spectrum, for example for resonance or oscillation analysis, of the component (1) is used for the mechanical excitation and the measurement of the mechanical response signal, and
- displaying a warning and/or carrying out a termination of the additive production of the component (1) if the mechanical response signal lies outside a predetermined tolerance range, wherein the mechanical response signal is compared to a simulated or computed value for the display of the warning and/or the carrying out of the termination, and wherein the mechanical response signal is compared to a mechanical response signal of at least one previously additively constructed layer (2') for the display of the warning and/or the carrying out of the termination, wherein the warning is displayed if the mechanical response signal lies outside a first predetermined tolerance range and wherein the termination of the additive production of the component (1) is carried out if the mechanical response signal lies outside a second predetermined tolerance range and wherein the second predetermined tolerance range is greater than the first predetermined tolerance range.

2. Method according to Claim 1, wherein the mechanical excitation is carried out by means of sound, vibrations, and/or oscillations, for example, piezoelectrically.

3. Method according to Claim 1 or 2, wherein the mechanical excitation and the measurement are parts of an acoustic resonance or oscillation analysis, a sound emission analysis, an ultrasonic test, or a vibration test.

4. Method according to one of the preceding claims, which is carried out such that a structural flaw (10) in the layer (2) or a detachment (11) of the component (1) from a component substrate (3) has the result that the mechanical response signal lies outside the predetermined tolerance range.

5. Additive production method comprising the method for testing according to one of the preceding claims, comprising the additive production of at least one further layer (2') for the component if the mechanical response signal lies within the predetermined tolerance range.

6. Additive production method according to Claim 5, which comprises a solidification step and wherein the mechanical excitation is carried out during a solidification of individual additively constructed layers of the component (1).

7. Additive production method according to Claim 5 or 6, wherein - proceeding from the mechanical response signal - parameters of the production of the component (1) are adapted to avoid flaws or damage.

8. Additive production method according to one of Claims 5 to 7, which comprises selective laser melting, selective laser sintering, or electron beam melting.

## Revendications

1. Procédé de contrôle d'une pièce (1) à produire par fabrication additive, comprenant les stades suivants :
- on excite mécaniquement au moins une couche (2), constituée par fabrication additive, de la pièce (1) ensemble avec un substrat (3) de pièce, pendant une production par fabrication additive de la pièce (1) sur le substrat de la pièce,
- on mesure un signal de réaction mécanique de la pièce (1), dans lequel, pour l'excitation mécanique et la mesure du signal de réaction mécanique, on tire parti d'un spectre de fréquence caractéristique, par exemple pour l'analyse de résonnance ou d'oscillation, de la pièce (1), et
- on indique une alerte et/ou on effectue un arrêt de la production par fabrication additive de la pièce (1), si le signal de réaction mécanique se trouve à l'extérieur d'une plage de tolérance définie à l'avance, dans lequel on compare le signal de réaction mécanique, pour l'indication de l'alerte et/ou pour effectuer l'arrêt à une valeur simulée ou calculée et dans lequel on compare le signal de réaction mécanique pour l'indication de l'alerte et/ou pour effectuer l'arrêt à un signal de réaction mécanique d'au moins une couche (2') constituée auparavant par fabrication additive, dans lequel on indique l'alerte si le signal de réaction mécanique se trouve à l'extérieur d'une première plage de tolérance définie à l'avance et dans lequel on effectue l'arrêt de la production par fabrication additive de la pièce (1) si le signal de réaction se trouve à l'extérieur d'une deuxième plage de tolérance définie à l'avance et dans lequel la deuxième plage de tolérance définie à l'avance est plus grande que la première plage de tolérance définie à l'avance.

2. Procédé suivant la revendication 1, dans lequel on effectue l'excitation mécanique au moyen du son, de vibrations et/ou d'oscillations, par d'exemple d'une manière piézo-électrique.

3. Procédé suivant la revendication 1 ou 2, dans lequel l'excitation mécanique et la mesure font partie d'une analyse acoustique de résonnance ou d'oscillation, d'une analyse d'émission du son, d'un contrôle par ultrasons ou d'un contrôle de vibration.

4. Procédé suivant l'une des revendications précédentes, qui est effectué de manière à ce qu'un défaut (10) de structure de la couche (2) ou un détachement (11) de la pièce (1) d'un substrat (3) de pièce fait que le signal de réaction mécanique se trouve à l'extérieur de la plage de tolérance définie à l'avance.

5. Procédé de production par fabrication additive, comprenant le procédé de contrôle suivant l'une des revendications précédentes, comprenant la production par fabrication additive d'au moins une autre couche (2') pour la pièce, si le signal de réaction mécanique est à l'intérieur de la plage de tolérance définie à l'avance.

6. Procédé de production par fabrication additive suivant la revendication 5, qui comprend un stade de consolidation et dans lequel on effectue l'excitation mécanique pendant une consolidation de diverses couches constituées par fabrication additive de la pièce (1) .

7. Procédé de production par fabrication additive suivant la revendication 5 ou 6, dans lequel - à partir du signal de réaction mécanique - on adapte des paramètres de la production de la pièce (1) pour prévenir des défauts ou des dommages.

8. Procédé de production par fabrication additive suivant l'une des revendications 5 à 7, qui comprend une fusion laser sélective, un frittage laser sélectif ou une fusion par faisceau d'électrons.
